# EUROPÄISCHE PATENTSCHRIFT

(11) **EP 3 374 808 B1**
(45) Veröffentlichungstag und Bekanntmachung des Hinweises auf die Patenterteilung: **03.06.2026**
(21) Anmeldenummer: 16795069.0
(22) Anmeldetag: 14.11.2016
(51) Int. Cl.: G02B 6/12, G02B 6/124, G02B 6/125, G02B 6/293

(54) **OPTISCHE KOMPONENTE UND VERFAHREN ZU DEREN HERSTELLUNG**
OPTICAL COMPONENT AND METHOD FOR THE PRODUCTION THEREOF
COMPOSANT OPTIQUE ET PROCÉDÉ DE FABRICATION

(30) Priorität: 12.11.2015 DE 102015222328
(43) Veröffentlichungstag der Anmeldung: 19.09.2018
(73) Patentinhaber: Fraunhofer-Gesellschaft zur Förderung der angewandten Forschung e.V., 80686 München (DE); Baker Hughes Inteq GmbH, 29221 Celle (DE)
(72) Erfinder: SCHADE, Wolfgang, 38644 Goslar (DE); KÖHRING, Michael, 37441 Bad Sachsa (DE); WALTERMANN, Christian, 38640 Goslar (DE); BETHMANN, Konrad, 30966 Hemmingen (DE); KRUSPE, Thomas, 29649 Wietzendorf (DE); JUNG, Sebastian, 30916 Isernhagen (DE); TACKMANN, Gunnar, 30171 Hannover (DE)
(74) Vertreter: Friese Goeden Patentanwälte PartGmbB
(86) Internationale Anmeldenummer: PCT/EP2016/077577
(87) Internationale Veröffentlichungsnummer: WO 2017/081316

(56) Entgegenhaltungen:
- WO-A1-2014/154528
- US-A1- 2009 304 331
- US-A1- 2013 208 358
- US-B1- 6 456 765
- US-B1- 6 567 573
- US-B1- 6 639 681
- DONG L ET AL: "Novel add/drop filters for wavelength-division-multiplexing optical fiber systems using a Bragg grating assisted mismatched coupler", IEEE PHOTONICS TECHNOLOGY LETTERS, IEEE SERVICE CENTER, PISCATAWAY, NJ, US, vol. 8, no. 12, 1 December 1996 (1996-12-01), pages 1656 - 1658, XP011431139, ISSN: 1041-1135, DOI: 10.1109/68.544709

## Beschreibung

Die Erfindung betrifft ein Spektrometer oder einen Demultiplexer mit zumindest einem ersten Wellenleiter, welcher eine optische Faser mit einem ersten Kern und einem den ersten Kern umgebenden Mantel ist, wobei in den Mantel zweite Kerne eingebracht sind, um zweite Wellenleiter zu bilden, wobei der erste Kern und jeder zweite Kern in einem Längsabschnitt nebeneinander und beabstandet geführt sind und in diesem Längsabschnitt jeweils ein Bragg-Gitter angeordnet ist.

Weiterhin betrifft die Erfindung ein Verfahren zur Herstellung eines solchen Spektrometers oder Demultiplexers durch Punkt-zu-Punkt-Belichten eines Substrates mit einem Kurzpulslaser.

US2013208358 betrifft ein Spektrometer, das in einem Substrat geschrieben ist und einen ersten Kern sowie eine Anzahl zweiter Kerne aufweist.

Aus der US 5, 978, 530 ist eine optische Komponente bekannt. Diese bekannte Komponente enthält zwei Wellenleiter, welche jeweils einen Kern und einen den Kern umgebenden Mantel aufweisen. Im Kern eines Wellenleiters befindet sich ein Faser-Bragg-Gitter, welches aus einer Mehrzahl von Raumbereichen mit verändertem Brechungsindex besteht, welche jeweils einen vorgebbaren Abstand zueinander aufweisen. Dieser vorgebbare Abstand definiert die Gitterkonstante des Faser-Bragg-Gitters. Die beiden Wellenleiter sind jeweils in einem Glasblock eingebettet. Die Glasblöcke werden an einer Längsseite poliert, wobei der Mantel des Wellenleiters zumindest teilweise entfernt wird. In einem darauffolgenden Herstellungsschritt werden beide Glasblöcke zusammengefügt, sodass Licht durch evaneszente Kopplung vom Kern des ersten Wellenleiters in den Kern des zweiten Wellenleiters übertreten kann. Das Faser-Bragg-Gitter wirkt dabei als Filterelement, sodass an den Ausgängen der optischen Komponente einerseits ein optisches Signal bereitgestellt wird, welches eine durch die Gitterkonstante definierte Wellenlänge aufweist und andererseits an einem anderen Ausgang ein optisches Signal bereitgestellt wird, welches diese Wellenlänge nicht mehr enthält.

Diese bekannte optische Komponente kann als Add-Drop-Filter in einem optischen WDM-System (Wavelength Division Multiplex) eingesetzt werden, d.h. ein Datenübertragungssystem, bei welchem unterschiedliche Datenströme auf zugeordneten optischen Trägersignalen unterschiedlicher Wellenlänge transportiert werden. Die Gitterkonstante des Faser-Bragg-Gitters definiert dabei die Wellenlänge eines Trägersignals, welches aus dem Eingangssignal entfernt wird.

Nachteilig an dieser bekannten optischen Komponente ist der große Aufwand, welcher mit der Herstellung der optischen Komponente verbunden ist. So erfordert die Herstellung eine präzise mechanische Bearbeitung und eine exakte Positionierung der beiden Wellenleiter zueinander, um die gewünschten Eigenschaften der Komponente zu erzielen. Die erforderlichen Prozessschritte des Polierens und Positionierens bei der Herstellung erhöhen das Risiko, Ausschuss zu produzieren, sodass sich die bekannten optischen Komponenten bisher nicht auf breiter Basis durchsetzen konnten.

Ausgehend vom Stand der Technik liegt der Erfindung somit die Aufgabe zugrunde, die Herstellung der Spektrometer oder Demultiplexer zu erleichtern und die Anwendungsmöglichkeiten zu erweitern. Darüber hinaus kann die mit der vorliegenden Erfindung zu lösende Aufgabe darin gesehen werden, ein Spektrometer oder einen Demultiplexer anzugeben, der einen geringeren Bauraum benötigt.

Die Aufgabe wird erfindungsgemäß durch eine Vorrichtung gemäß Anspruch 1 und ein Verfahren nach Anspruch 10 gelöst.

Vorteilhafte Weiterbildungen der Erfindung finden sich in den Unteransprüchen.

Nachfolgend soll die Erfindung ohne Beschränkung des allgemeinen Erfindungsgedankens anhand von Ausführungsbeispielen erläutert werden, welche in den anliegenden Figuren dargestellt sind. Dabei zeigt:
Figur 1 eine Ausführungsform eines Add-Drop-Filters die nicht Gegenstand der vorliegenden Erfindung ist.
Figur 2 zeigt ein Spektrometer gemäß der vorliegenden Erfindung.
Figur 3 erläutert unterschiedliche Anordnungen von Wellenleitern und Bragg-Gittern.
Figur 4 zeigt ein Wellenleiter-integriertes Spektrometer gemäß der vorliegenden Erfindung.
Figur 5 zeigt das Transmissionsverhalten des Add-Drop-Filters gemäß Figur 1.

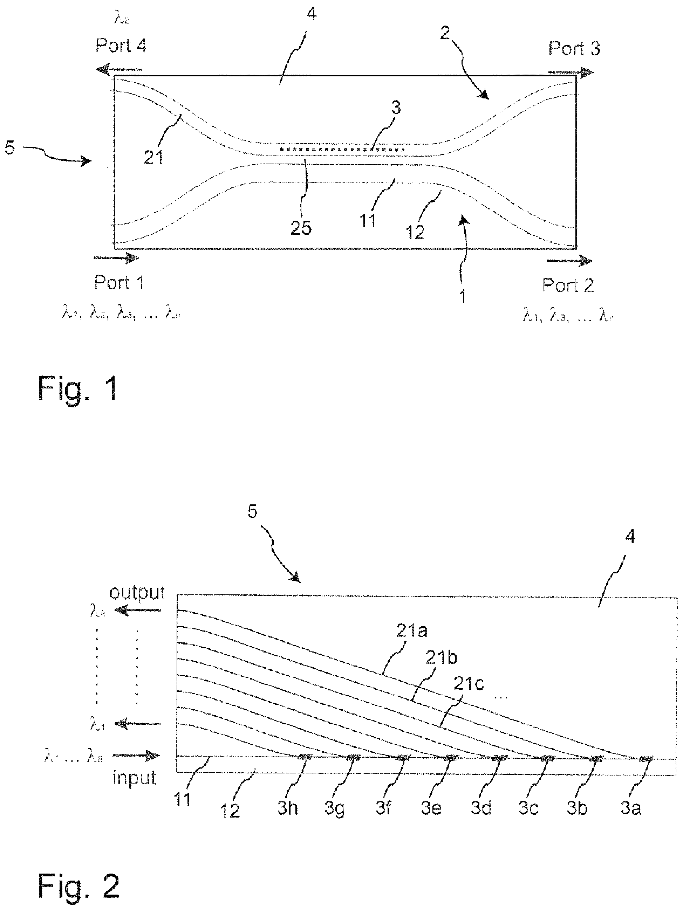

Figur 1 zeigt einen Add-Drop-Filter, der nicht Gegenstand der vorliegenden Erfindung ist.

Dem Add-Drop-Filter kann ein optisches Signal zugeführt werden, welches mehrere digitale Datenströme enthält, welche auf jeweils zugeordneten Trägersignalen unterschiedlicher Wellenlänge codiert sind. Ein solches optisches Eingangssignal kann auch als WDM-Signal (Wavelength Division Multiplex) bezeichnet werden.

Der Add-Drop-Filter hat die Aufgabe, einen einzelnen Datenstrom mit einer vorgebbaren Trägerfrequenz bzw. Wellenlänge aus dem WDM-Signal zu entfernen und/oder ein Trägersignal mit einer vorgebbaren Wellenlänge hinzuzufügen. Hierzu enthält die optische Komponente 5 gemäß der vorliegenden Erfindung ein Substrat 4, welches beispielsweise aus einem Polymer, Glas, Quarz oder einem Halbleitermaterial wie beispielsweise Silizium, Germanium oder einem Verbindungshalbleiter bestehen kann. In einigen Ausführungsformen der Erfindung kann das Substrat 4 eine Mehrzahl von Substraten enthalten, welche mehrere optische und/oder elektronische Bauteile integrieren. Beispielsweise kann das Substrat 4 Quarz enthalten, um optische Komponenten aufzunehmen und auf dem Quarzsubstrat 4 kann ein Siliziumsubstrat mittels Flip-Chip-Bonding, Klebung oder Schweißung aufgebracht sein, welches elektronische Bauteile aufnimmt.

Das Substrat 4 weist einen vorgebbaren Brechungsindex auf.

Durch Materialbearbeitung vorgebbarer Flächen- bzw. Raumbereiche des Substrates 4 kann der Brechungsindex in vorgebbaren Bereichen geändert werden. Hierzu kann das Substrat 4 beispielsweise mit Dotierstoffen versehen und/oder einer elektromagnetischen Strahlung ausgesetzt werden. In einigen Ausführungsformen der Erfindung kann die elektromagnetische Strahlung durch einen Kurzpulslaser bereitgestellt werden, welcher eine Pulsdauer von weniger als 1 ps oder weniger als 100 fs oder weniger als 20 fs aufweist. Durch die Laserleistung, die Vorschubgeschwindigkeit, die Pulsdauer, die Pulsform und die Anzahl der Überschreibvorgänge kann der Brechungsindexkontrast, d.h. die Änderung des Brechungsindex, variiert und an vorgebbare Sollwerte angepasst werden.

Durch entsprechende Materialbearbeitung ist im dargestellten Ausführungsbeispiel im Substrat 4 ein erster Kern 11 ausgebildet, welcher von einem ersten Mantel 12 umgeben ist. Der Mantel 12 wird dabei vom Material des Substrates 4 gebildet. Die Unterschiede des Brechungsindex zwischen dem Kern 11 und dem Mantel 12 sind dabei so gewählt, dass ein optisches Signal durch Totalreflexion an der Grenzfläche im Kern 11 geführt werden kann.

Weiterhin weist die optische Komponente 5 einen zweiten Kern 21 auf, welcher ebenfalls durch einen Raumbereich mit unterschiedlichem Brechungsindex gebildet wird, sodass auch im zweiten Kern 21 optische Signale durch Totalreflexion geführt werden können.

Sowohl der erste Wellenleiter 1 mit dem ersten Kern 11 als auch der zweite Wellenleiter 2 mit dem zweiten Kern 21 münden an gegenüberliegenden Seiten des in etwa rechteckigen Substrates 4, sodass die optische Komponente 5 vier Anschlüsse aufweist, welche mit den Bezeichnungen Port 1, Port 2, Port 3 und Port 4 versehen sind.

Der erste Kern 11 und der zweite Kern 21 weisen einen Längsabschnitt 25 auf, in welchem diese in etwa nebeneinander verlaufen. In einigen Ausführungsformen der Erfindung kann eine Fehlanpassung zwischen dem ersten Kern 11 und dem zweiten Kern 21 bestehen, welche eine Kopplung optischer Signale zwischen den Kernen verhindert oder reduziert. Die Fehlanpassung kann durch unterschiedliche Brechungsindexkontraste zwischen Kern und Mantel und/oder unterschiedliche Durchmesser und/oder unterschiedliche Querschnitte der Kerne 11 und 21 erzeugt werden. Durch die Fehlanpassung kann ein in einem Kern geführtes optisches Signal nicht evaneszent in den anderen Kern koppeln.

Im zweiten Kern ist darüber hinaus ein Bragg-Gitter 3 angeordnet. Das Bragg-Gitter 3 kann in einigen Ausführungsformen der Erfindung ein gechirptes Bragg-Gitter, ein apodisiertes Bragg-Gitter oder ein phasenschiebendes bzw. Pi-shaped Bragg-Gitter sein. Das Bragg-Gitter führt dazu, dass ungeachtet der Fehlanpassung Licht einer vorgebbaren Wellenlänge oder eines vorgebbaren Wellenlängenbereiches zwischen dem ersten Kern 11 und dem zweiten Kern 21 übertreten kann. Die Wellenlänge bzw. der Wellenlängenbereich ist durch die Gitterkonstante des Bragg-Gitters definiert.

Wird nun in Port 1 ein WDM-Signal eingekoppelt, so propagiert dieses im ersten Kern 11 zu Port 2. Im Längsabschnitt 25 findet eine evaneszente Kopplung eines Teilspektrums des WDM-Signals in den zweiten Kern 21 statt. Licht einer vorgebbaren, durch die Gitterkonstante des Bragg-Gitters 3 definierten Wellenlänge bzw. eines Wellenlängenbereiches wird reflektiert, sodass dieses am Port 4 zur Verfügung steht.

Alternativ oder zusätzlich kann am Port 4 ein optisches Signal mit der durch das Bragg-Gitter 3 definierten Wellenlänge eingekoppelt werden. Am Port 2 kann ein optisches Signal ohne diese Wellenlänge zugeführt werden. Beide Eingangssignale stehen dann kombiniert am Port 1 zur Verfügung. Somit ist die in Figur 1 gezeigte optische Komponente 5 gemäß der ersten Ausführungsform der Erfindung dazu geeignet, ein bestimmtes Trägersignal aus einem WDM-Signal zu entfernen und am Port 4 bereitzustellen oder optional ein anderes Datensignal, mit derselben Trägerfrequenz, dem am Port 2 bereitgestellten WDM-Signal zuzufügen.

Anders als bekannte optische Komponenten mit ähnlicher Funktion kann die erfindungsgemäße Komponente durch Lasermaterialbearbeitung, Heißprägen, Drucken oder ähnliche Verfahren in einfacher Weise mit reproduzierbarer Qualität bereitgestellt werden.

Im Falle einer Lasermaterialbearbeitung kann die Komponente 5 schnell an unterschiedliche Anforderungen angepasst werden. So kann beispielsweise durch Änderung der Gitterkonstanten des Bragg-Gitters 3 ein anderes Untersignal aus dem WDM-Signal ausgewählt werden. Hierfür müssen lediglich die dem Laserbearbeitungssystem zugeführten Fertigungsdaten geändert werden, was durch entsprechende Computersoftware einfach möglich ist. Eine solche Lasermaterialbearbeitung ermöglicht auch eine zuverlässige Reproduzierbarkeit der in das Substrat 4 geschriebenen Strukturen, sodass keine weiteren mechanischen Bearbeitungsschritte, wie beispielsweise Polieren, Schleifen oder Fügen, erforderlich sind. Hierdurch wird das Fertigungsverfahren unanfällig gegen Fehler, sodass die Produktionsausbeute und die Qualität erhöht sein können.

Figur 2 zeigt ein Spektrometer gemäß der vorliegenden Erfindung. Auch das Spektrometer gemäß der zweiten Ausführungsform enthält ein Substrat **4,** welches einen vorgebbaren Brechungsindex aufweist und dessen Brechungsindex in vorgebaren Raumbereichen geändert wird. Auch im Fall der zweiten Ausführungsform kann dies durch Belichten des Substrates 4 erfolgen, beispielsweise durch Punkt-zu-Punkt-Belichten mit einem Laser oder durch eine Maskierung und nachfolgende flächige Belichtung.

Die optische Komponente 5 gemäß der zweiten Ausführungsform enthält einen ersten Kern 11, welcher entlang einer Längskante des Substrates 4 verläuft. Der erste Kern 11 ist vom Mantel 12 umgeben, welcher auch in diesem Fall vom Material des Substrates 4 gebildet wird. Der erste Kern 11 kann beispielsweise durch Belichtung des Materials 4 und eine dadurch induzierte Brechungsindexänderung erzeugt werden. Gemäß der vorliegenden Erfindung sind der erste Kern 11 sowie der diesen umgebenden Mantel 12 eine Glasfaser oder eine Polymerfaser, welche in das Material des Substrates 4 eingebettet wird.

In oder neben dem ersten Kern 11 befindet sich eine Mehrzahl von Bragg-Gittern 3. Im dargestellten Ausführungsbeispiel sind acht Bragg-Gitter 3a, 3b, 3c, 3d, 3e, 3f, 3g und 3h dargestellt. Die Anzahl der Bragg-Gitter kann jedoch auch größer oder geringer sein und in einigen Ausführungsformen der Erfindung beispielsweise zwischen etwa 4 und etwa 20 betragen.

Jedem Bragg-Gitter ist ein zweiter Kern 21a, 21b, 21c, 21d, 21e, 21f, 21g und 21h zugeordnet. Jeder zweite Kern weist einen Längsabschnitt 25 auf, in welchem der zweite Kern 21 neben dem ersten Kern 11 verläuft, sodass eine evaneszente Kopplung optischer Signale möglich ist. Die den zweiten Kernen zugeordneten Bragg-Gitter 3 wirken dabei als Filter, sodass nur Licht einer vorgebbaren, von der Gitterkonstante festgelegten Wellenlänge in den jeweiligen zweiten Kern 21 übertreten kann.

Das im zweiten Kern 21 geführte Licht wird an dessen Ende, welches beispielsweise an einer Kante des Substrates 4 liegen kann, ausgekoppelt. Auf diese Weise steht eine der Anzahl der zweiten Kerne 21 und der Anzahl der Bragg-Gitter 3 entsprechende Anzahl von Ausgangswellenleitern zur Verfügung, welche jeweils Licht einer vorgebbaren Wellenlänge oder eines vorgebbaren Wellenlängenbereiches bereitstellen. Eine optische Komponente 5 gemäß der zweiten Ausführungsform der Erfindung kann als Demultiplexer für ein WDM-Signal in der optischen Nachrichtentechnik verwendet werden oder als Spektrometer, beispielsweise für die Auslese einer faseroptischen Sensorik. In einigen Ausführungsformen der Erfindung kann statt den Ausgangswellenleitern auch unmittelbar ein Photodiodenarray an der Kante des Substrates 4 vorhanden sein.

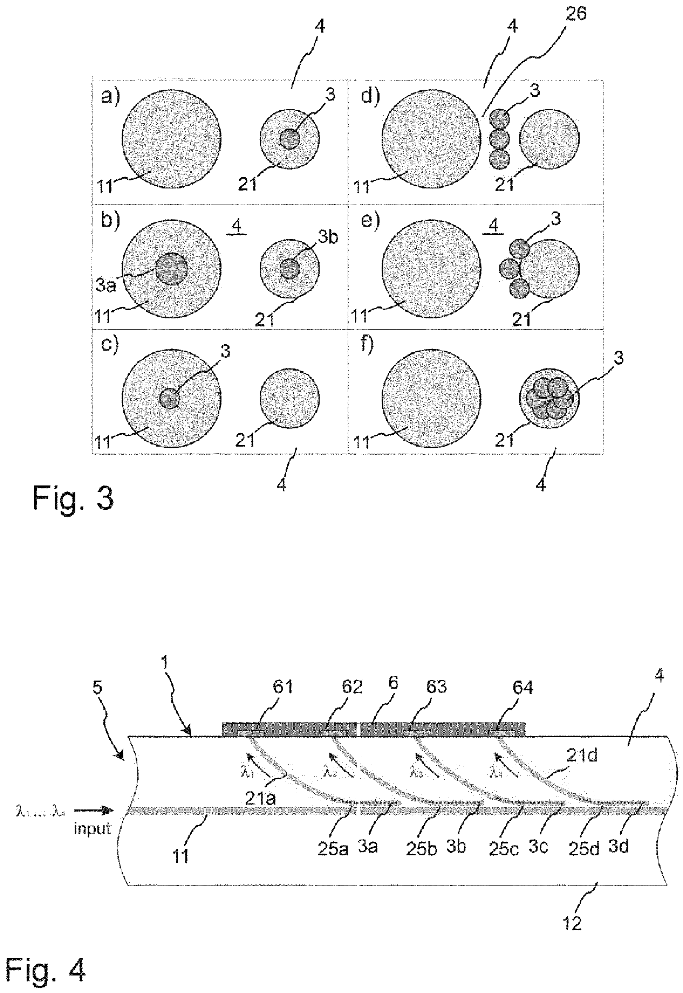

Anhand der Figur 3, welche Querschnitte des ersten Kerns 11 und des zweiten Kerns 21 im Bereich des Längsabschnittes 25 zeigt, wird die Anordnung zumindest eines Bragg-Gitters 3 in verschiedenen Ausführungsformen der Erfindung erläutert. Dabei zeigen die Figuren 3a, 3b, 3c, 3d, 3e und 3f jeweils einen ersten Kern 11 und einen zweiten Kern 21. In den dargestellten Ausführungsbeispielen haben die Kerne jeweils einen runden Querschnitt. Der zweite Kern 21 weist dabei einen geringeren Durchmesser und einen geringeren Flächeninhalt auf als der erste Kern 11. Beispielsweise kann der erste Kern 11 als Multi-Mode-Wellenleiter ausgeführt sein und der zweite Kern 21 als Single-Mode-Wellenleiter. In anderen Ausführungsformen der Erfindung können beide Kerne einen identischen Querschnitt aufweisen oder der erste Kern 11 kann einen geringeren Querschnitt aufweisen als der zweite Kern 21. In einigen Ausführungsformen der Erfindung können beide Kerne einen unterschiedlichen Brechungsindexkontrast zum umgebenden Material aufweisen. In einigen Ausführungsformen der Erfindung kann der Brechungsindexkontrast des ersten Kernes 11 größer sein als der Brechungsindexkontrast des zweiten Kernes 21.

Wie aus Figur 3 ersichtlich ist, sind die Kerne 11 und 21 beabstandet zueinander angeordnet, d.h. die den jeweiligen Kernen zugeordneten Bereiche überlappen in einer Richtung senkrecht zur Ausbreitungsrichtung nicht. Der Abstand ist dabei so gewählt, das eine evaneszente Kopplung möglich ist. In einigen Ausführungsformen der Erfindung kann der Abstand zwischen etwa 0,1 und etwa 5 Wellenlängen oder zwischen etwa 0,3 und etwa 3 Wellenlängen der in den Wellenleitern propagierenden Signale betragen. In einigen Ausführungsformen der Erfindung kann der Abstand zwischen etwa 100 nm und etwa 5 µm oder zwischen etwa 200 nm und etwa 4 µm oder zwischen etwa 300 nm und etwa 4 µm oder zwischen etwa 400 nm und etwa 3 µm oder zwischen etwa 500 nm und etwa 3 µm betragen.

Nachfolgend werden unterschieldiche Anordnungen der Kerne und der jeweils zugeordneten Bragg-Gitter gezeigt:
Figur 3a zeigt einen zweiten Kern 21 mit einem einzigen Bragg-Gitter 3. Der erste Kern 11 enthält in dieser Ausführungsform kein Bragg-Gitter. Der Querschnitt der Figur 3a entspricht somit einer Ausführungsform, welche bereits anhand der Figur 1 näher erläutert wurde.
Figur 3b zeigt eine Ausführungsform mit zwei Bragg-Gittern 3a und 3b, welche jeweils im ersten Kern 11 und im zweiten Kern 21 angeordnet sind.

Gemäß der Ausführungsform, welche in Figur 3c dargestellt ist, enthält nur der erste Kern 11 ein Bragg-Gitter 3, wohingegen der zweite Kern 21 ohne Bragg-Gitter hergestellt wurde.

Figur 3d erläutert eine Ausführungsform der Erfindung, bei welcher drei Bragg-Gitter 3 verwendet werden. Diese sind im dem Substrat 4 angeordnet, und zwar im Zwischenraum 26 zwischen dem ersten Kern 11 und dem zweiten Kern 21.

Figur 3e zeigt ebenfalls drei Bragg-Gitter 3, welche an der Grenzfläche des ersten Kerns 21 zum umgebenden Material des Substrates 4 angeordnet sind. Auch in diesem Fall sind die Bragg-Gitter 3 dem Spalt 26 und damit dem ersten Kern 11 zugewandt.

Figur 3f zeigt eine Ausführungsform mit einer Mehrzahl von Bragg-Gittern 3, welche alle im ersten Kern 21 angeordnet sind. Im dargestellten Ausführungsbeispiel sind sechs Bragg-Gitter 3 vorhanden. In anderen Ausführungsformen der Erfindung kann die Anzahl der Bragg-Gitter größer oder geringer sein.

Figur 3 erläutert somit, dass die Positionierung und/oder die Form des eingeschriebenen Bragg-Gitters 3 innerhalb des Längsabschnittes 25 variieren kann. In Abhängigkeit der geplanten Anwendung der optischen Komponente 5 kann das zumindest eine Bragg-Gitter 3 innerhalb eines Wellenleiters, innerhalb beider Wellenleiter oder auch zwischen beiden Wellenleitern angeordnet sein. In einigen Ausführungsformen der Erfindung kann die Form des zumindest einen Bragg-Gitters an die Form eines Kernes eines Wellenleiters angepasst werden.

Figur 4 zeigt ein Spektrometer bzw. einen Demultiplexer, gemäß der vorliegenden Erfindung, welcher unmittelbar in einer optischen Faser angeordnet ist und auf diese Weise nur einen geringen zusätzlichen Bauraum benötigt.

Das Substrat 4 gemäß der dritten Ausführungsform umfasst einen ersten Wellenleiter 1, welcher einen ersten Kern 11 und einen diesen umgebenden Mantel 12 aufweist. Der Wellenleiter 1 kann eine an sich bekannte, weit verbreitete Glasfaser oder eine Polymerfaser sein. Solche Fasern sind aus der optischen Nachrichtentechnik bekannt. Der Mantel 12 einer solchen Glasfaser kann beispielsweise eine zylindrische Grundform aufweisen, wobei der Kern 11 mit rundem Querschnitt koaxial im Mantel 12 eingebettet ist. Es können Einmoden- oder Mehrmodenfasern verwendet werden. In einigen Ausführungsformen der Erfindung kann der erste Kern mehrere Moden transportieren, welche auf eine Mehrzahl von zweiten Kernen ausgekoppelt werden, welche jeweils nur eine Mode transportieren können.

Der erste Wellenleiter 1 wird durch Bearbeitung mit einem Laser modifiziert, sodass zumindest ein zweiter Kern 21 im Mantel 12 des ersten Wellenleiters 1 ausgebildet wird. Im dargestellten Ausführungsbeispiel sind vier zweite Kerne 21a, 21b, 21c und 21d dargestellt. In anderen Ausführungsformen der Erfindung kann die Anzahl der zweiten Kerne jedoch größer oder geringer sein. Jeder zweite Kern 21 weist einen zugeordneten Längsabschnitt 25a, 25b, 25c und 25d auf, welcher neben dem ersten Kern 11 verläuft, sodass eine evaneszente Kopplung des optischen Signals vom ersten Kern 11 in den zweiten Kern 21 möglich ist.

Im Längsabschnitt 25 befindet sich jeweils ein zugeordnetes Bragg-Gitter 3, wie vorstehend bereits beschrieben wurde. Sofern die vier Bragg-Gitter 3a, 3b, 3c und 3d unterschiedliche Gitterkonstanten aufweisen, wird in jedem zweiten Kern 21 eine vorgebbare Wellenlänge bzw. ein vorgebbarer Wellenlängenbereich geführt.

Die zweiten Kerne 21 münden an der Mantelfläche des Wellenleiters 1. Dort kann ein Photodiodenarray 6 angeordnet sein.

Das Photodiodenarray 6 kann eine komplementäre Form zur Mantelfläche des Wellenleiters 1 aufweisen und diesen beispielsweise in Form eines Ringes oder einer Halbschale teilweise bedecken. Im dargestellten Ausführungsbeispiel weist das Photodiodenarray 6 vier Photodioden 61, 62, 63 und 64 auf, welche jeweils das Licht eines zweiten Kernes 21a, 21b, 21c und 21d empfangen und in elektrische Signale wandeln.

Wird auf dem ersten Wellenleiter 1 ein WDM-Signal eines Telekommunikationssystems geführt, so kann jede Photodiode des Photodiodenarrays 6 einen Datenstrom eines vorgebbaren, durch die Gitterkonstante des Bragg-Gitters 3a definierten Trägersignals empfangen. Sofern der Wellenleiter 1 Teil einer faseroptischen Sensorik ist, kann die in Figur 4 gezeigte dritte Ausführungsform der Erfindung als integriertes Spektrometer verwendet werden, um die Messwerte optischer Sensoren auszuwerten, ohne zusätzlichen Bauraum und zusätzliche Fehleranfälligkeit durch externe Spektrometer in Kauf nehmen zu müssen.

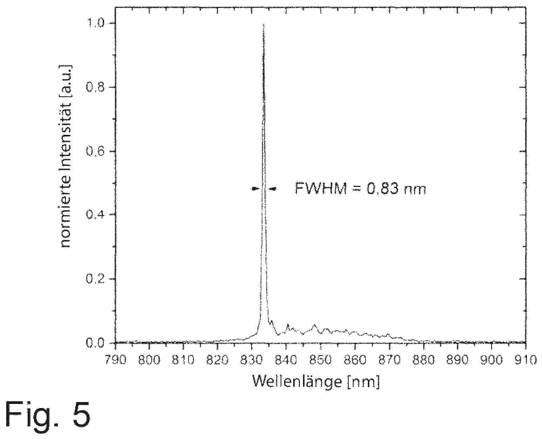

Figur 5 zeigt das Transmissionsverhalten des Add-Drop-Filters gemäß Figur 1. Dargestellt ist die Wellenlänge auf der Abszisse und die Intensität des Lichtes auf der Ordinate. Figur 5 zeigt das optische Signal an Port 4 der ersten Ausführungsform der Erfindung gemäß Figur 1. Wie Figur 5 zeigt, erlaubt das integrierte Bragg-Gitter, einen schmalen Reflexionsbereich zu definieren. Hierdurch können WDM-Signale mit geringem Kanalabstand verarbeitet werden.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen

## Patentansprüche

1. Spektrometer oder Demultiplexer (5) mit zumindest einem ersten Wellenleiter (1), welcher eine optische Faser mit einem ersten Kern (11) und einem den ersten Kern umgebenden Mantel (12) ist, wobei in den Mantel (12) zweite Kerne (21a, 21b, 21c, 21d) eingebracht sind, um zweite Wellenleiter (2) zu bilden, wobei der erste Kern (11) und jeder zweite Kern (21a, 21b, 21c, 21d) in einem Längsabschnitt (25) nebeneinander und beabstandet geführt sind und in diesem Längsabschnitt jeweils ein Bragg-Gitter (3a, 3b, 3c, 3d) angeordnet ist.

2. Spektrometer oder Demultiplexer nach Anspruch 1, **dadurch gekennzeichnet, dass** der Abstand zwischen dem ersten Kern (11) und dem zweiten Kern (21a, 21b, 21c, 21d) im Längsabschnitt (25a, 25b, 25c, 25d) etwa 0,1 und etwa 5 Wellenlängen oder etwa 0,3 und etwa 3 Wellenlängen der in dem ersten Kern (11) propagierenden Signale beträgt oder
**dadurch gekennzeichnet, dass** der Abstand zwischen dem ersten Kern (11) und dem zweiten Kern (21a, 21b, 21c, 21d) im Längsabschnitt (25a, 25b, 25c, 25d)
zwischen etwa 100 nm und etwa 5 µm oder
zwischen etwa 200 nm und etwa 4 µm oder
zwischen etwa 300 nm und etwa 4 µm oder
zwischen etwa 400 nm und etwa 3 µm oder
zwischen etwa 500 nm und etwa 3 µm beträgt.

3. Spektrometer oder Demultiplexer nach Anspruch 1 bis 2, **dadurch gekennzeichnet, dass** an einer Mantelfläche des ersten Wellenleiters (1) ein Photodiodenarray angeordnet ist, welches dazu eingerichtet ist, optische Signale aus den zweiten Kernen (21a, 21b, 21c, 21d) zu empfangen.

4. Spektrometer oder Demultiplexer nach einem der Ansprüche 1 bis 3, **dadurch gekennzeichnet, dass** zumindest ein Wellenleiter (1, 2) ein Singlemode-Wellenleiter ist und zumindest ein Wellenleiter (2, 1) ein Multimode-Wellenleiter ist.

5. Spektrometer oder Demultiplexer nach einem der Ansprüche 1 bis 4, **dadurch gekennzeichnet, dass** das Bragg-Gitter (3a, 3b, 3c, 3d) im ersten Kern (11) angeordnet ist und/oder
dass das Bragg-Gitter (3a, 3b, 3c, 3d) im zweiten Kern (21a, 21b, 21c, 21d) angeordnet ist und/oder
dass das Bragg-Gitter (3a, 3b, 3c, 3d) im Mantel (12) zwischen dem ersten Kern (11) und dem zweiten Kern (21a, 21b, 21c, 21d) angeordnet ist.

6. Spektrometer oder Demultiplexer nach Anspruch 5, **dadurch gekennzeichnet, dass** die Bragg-Gitter (3a, 3b, 3c, 3d) jeweils eine unterschiedliche Gitterkonstante aufweisen.

7. Spektrometer oder Demultiplexer nach einem der Ansprüche 1 bis 6, **dadurch gekennzeichnet, dass** eine Fehlanpassung zwischen dem ersten Kern (11) und dem zweiten Kern (21a, 21b, 21c, 21d) besteht, welche eine Kopplung optischer Signale zwischen den Kernen (11, 21a, 21b, 21c, 21d) verhindert oder reduziert.

8. Spektrometer oder Demultiplexer nach Anspruch 7, **dadurch gekennzeichnet, dass** die Fehlanpassung durch unterschiedliche Brechungsindexkontraste zwischen Kern (11, 21a, 21b, 21c, 21d) und Mantel (12) und/oder unterschiedliche Durchmesser und/oder unterschiedliche Querschnitte der Kerne (11, 21a, 21b, 21c, 21d) erzeugt ist.

9. Spektrometer oder Demultiplexer nach einem der Ansprüche 1 bis 8, **dadurch gekennzeichnet, dass** zumindest ein Bragg-Gitter (3a, 3b, 3c, 3d) als gechirptes Bragg-Gitter ausgeführt ist und/oder
dass zumindest ein Bragg-Gitter (3a, 3b, 3c, 3d) als apodisiertes Bragg-Gitter ausgeführt ist und/oder
dass zumindest ein Bragg-Gitter (3a, 3b, 3c, 3d) als pi-shaped Bragg-Gitter ausgeführt ist.

10. Verfahren zur Herstellung eines Demultiplexers oder eines Spektrometers, mit folgenden Schritten:
Bereitstellen einer optischen Faser mit einem ersten Kern (11) und einem den ersten Kern umgebenden Mantel (12) als ersten Wellenleiter (1) und
Punkt-zu-Punkt-Belichten des Mantels (12) mit einem Kurzpulslaser, so dass sich der Brechungsindex in den belichteten Bereichen ändert, wobei in den Mantel (12) zumindest ein zweiter Kern (21a, 21b, 21c, 21d) eingeschrieben wird so dass ein zweiter Wellenleiter (2) gebildet wird und der erste Kern (11) und der zweite Kern (21a, 21b, 21c, 21d) in einem Längsabschnitt (25a, 25b, 25c, 25d) nebeneinander und benachbart verlaufen und
Punkt-zu-Punkt-Belichten des Mantels (12) mit einem Kurzpulslaser, so dass im Mantel (12) zwischen dem ersten Kern (11) und dem zweiten Kern (21a, 21b, 21c, 21d) zumindest ein Bragg-Gitter (3a, 3b, 3c, 3d) eingeschrieben wird, und/oder
Punkt-zu-Punkt-Belichten des ersten Kerns (11), so dass im ersten Kern (11) zumindest ein Bragg-Gitter (3a, 3b, 3c, 3d) eingeschrieben wird und/oder
Punkt-zu-Punkt-Belichten des zweiten Kerns, so dass im zweiten Kern (21a, 21b, 21c, 21d) zumindest ein Bragg-Gitter (3a, 3b, 3c, 3d) eingeschrieben wird, so dass sich im Längsabschnitt (25a, 25b, 25c, 25d) zumindest ein Bragg-Gitter (3a, 3b, 3c, 3d) befindet.

11. Verfahren nach Anspruch 10, **dadurch gekennzeichnet, dass** der Abstand zwischen dem ersten Kern (11) und dem zweiten Kern (21a, 21b, 21c, 21d) im Längsabschnitt (25a, 25b, 25c, 25d)
zwischen etwa 100 nm und etwa 5 µm oder
zwischen etwa 200 nm und etwa 4 µm oder
zwischen etwa 300 nm und etwa 4 µm oder
zwischen etwa 400 nm und etwa 3 µm oder
zwischen etwa 500 nm und etwa 3 µm beträgt.

12. Verfahren nach einem der Ansprüche 10 oder 11, **dadurch gekennzeichnet, dass** die Anzahl der auf einen Punkt einwirkenden Einzelpulse, die Pulsform, die Pulsenergie, die Vorschubgeschwindigkeit und/oder die Zahl der Überschreibvorgänge variiert wird.

13. Verfahren nach einem der Ansprüche 10 bis 12, **dadurch gekennzeichnet, dass** eine Fehlanpassung zwischen dem ersten Kern (11) und dem zweiten Kern (21a, 21b, 21c, 21d) erzeugt wird, welche eine Kopplung optischer Signale zwischen den Kernen (11, 21a, 21b, 21c, 21d) verhindert oder reduziert.

14. Verfahren nach einem der Ansprüche 10 bis 13, **dadurch gekennzeichnet, dass** die Bragg-Gitter (3a, 3b, 3c, 3d) jeweils eine unterschiedliche Gitterkonstante aufweisen.

15. Verfahren nach einem der Ansprüche 10 bis 14, **dadurch gekennzeichnet, dass** an einer Mantelfläche des ersten Wellenleiters (1) ein Photodiodenarray angeordnet wird, welches dazu eingerichtet ist, optische Signale aus den zweiten Kernen (21a, 21b, 21c, 21d) zu empfangen.

## Claims

1. Spectrometer or demultiplexer (5) comprising at least one first waveguide (1) which is an optical fiber having a first core (11) and a casing (12) surrounding the first core, wherein second cores (21a, 21b, 21c, 21d) are introduced into the casing (12), to form second waveguides (2), wherein the first core (11) and each second core (21a, 21b, 21c, 21d) are guided side by side and at a distance from one another in a longitudinal section (25), and one Bragg grating (3a, 3b, 3c, 3d) each is arranged in this longitudinal section.

2. Spectrometer or demultiplexer according to claim 1, **characterized in that** the distance between the first core (11) and the second core (21a, 21b, 21c, 21d) in the longitudinal section (25a, 25b, 25c, 25d) is approximately 0.1 and approximately 5 wavelengths or approximately 0.3 and approximately 3 wavelengths of the signals propagating in the first core (11), or **characterized in that** the distance between the first core (11) and the second core (21a, 21b, 21c, 21d) in the longitudinal section (25a, 25b, 25c, 25d) is between approximately 100 nm and approximately 5 µm or between approximately 200 nm and approximately 4 µm or between approximately 300 nm and approximately 4 µm or between approximately 400 nm and approximately 3 µm or between approximately 500 nm and approximately 3 µm.

3. Spectrometer or demultiplexer according to claims 1 to 2, **characterized in that** a photodiode array is arranged on a casing surface of the first waveguide (1), which array is designed to receive optical signals from the second cores (21a, 21b, 21c, 21d).

4. Spectrometer or demultiplexer according to any one of claims 1 to 3, **characterized in that** at least one waveguide (1, 2) is a single-mode waveguide and at least one waveguide (2, 1) is a multi-mode waveguide.

5. Spectrometer or demultiplexer according to any one of claims 1 to 4, **characterized in that** the Bragg grating (3a, 3b, 3c, 3d) is arranged in the first core (11) and/or
**in that** the Bragg grating (3a, 3b, 3c, 3d) is arranged in the second core (21a, 21b, 21c, 21d) and/or
**in that** the Bragg grating (3a, 3b, 3c, 3d) is arranged in the casing (12) between the first core (11) and the second core (21a, 21b, 21c, 21d).

6. Spectrometer or demultiplexer according to claim 5, **characterized in that** each of the Bragg gratings (3a, 3b, 3c, 3d) has a different grating constant.

7. Spectrometer or demultiplexer according to any one of claims 1 to 6, **characterized in that** there is a mismatch between the first core (11) and the second core (21a, 21b, 21c, 21d), said mismatch preventing or reducing a coupling of optical signals between the cores (11, 21a, 21b, 21c, 21d).

8. Spectrometer or demultiplexer according to claim 7, **characterized in that** the mismatch is created by different refractive index contrasts between core (11, 21a, 21b, 21c, 21d) and casing (12) and/or different diameters and/or different cross-sections of the cores (11, 21a, 21b, 21c, 21d).

9. Spectrometer or demultiplexer according to any one of claims 1 to 8, **characterized in that** at least one Bragg grating (3a, 3b, 3c, 3d) is designed as a chirped Bragg grating and/or
**in that** at least one Bragg grating (3a, 3b, 3c, 3d) is designed as an apodized Bragg grating and/or
**in that** at least one Bragg grating (3a, 3b, 3c, 3d) is designed as a pi-shaped Bragg grating.

10. Method for producing a demultiplexer or a spectrometer, comprising the following steps:
providing an optical fiber having a first core (11) and a casing (12) which surrounds the first core as first waveguide (1) and
point-to-point exposure of the casing (12) with a short-pulse laser, such that the refractive index changes in the exposed areas,
wherein at least one second core (21a, 21b, 21c, 21d) is inscribed in the casing (12) in such a way that a second waveguide (2) is formed and the first core (11) and the second core (21a, 21b, 21c, 21d) run side by side and adjacent to one another in a longitudinal section (25a, 25b, 25c, 25d) and
point-to-point exposure of the casing (12) with a short-pulse laser, such that at least one Bragg grating (3a, 3b, 3c, 3d) is inscribed in the casing (12) between the first core (11) and the second core (21a, 21b, 21c, 21d), and/or
point-to-point exposure of the first core (11), such that in the first core (11) at least one Bragg grating (3a, 3b, 3c, 3d) is inscribed and/or
point-to-point exposure of the second core, such that in the second core (21a, 21b, 21c, 21d) at least one Bragg grating (3a, 3b, 3c, 3d) is inscribed, such that in the longitudinal section (25a, 25b, 25c, 25d) there is at least one Bragg grating (3a, 3b, 3c, 3d).

11. Method according to claim 10, **characterized in that** the distance
between the first core (11) and the second core (21a, 21b, 21c, 21d) in the longitudinal section (25a, 25b, 25c, 25d) is
between approximately 100 nm and approximately 5 µm or
between approximately 200 nm and approximately 4 µm or
between approximately 300 nm and approximately 4 µm or
between approximately 400 nm and approximately 3 µm or
between approximately 500 nm and approximately 3 µm.

12. Method according to any one of claims 10 or 11, **characterized in that** the number of single pulses which influence a point or spot, the pulse shape, the pulse energy, the feed rate and/or the number of overwrite processes is varied.

13. Method according to any one of claims 10 to 12, **characterized in that** a mismatch between the first core (11) and the second core (21a, 21b, 21c, 21d) is created, which prevents or reduces a coupling of optical signals between the cores (11, 21a, 21b, 21c, 21d).

14. Method according to any one of claims 10 to 13, **characterized in that** the Bragg gratings (3a, 3b, 3c, 3d) each have a different grating constant.

15. Method according to any one of claims 10 to 14, **characterized in that** a photodiode array is arranged on a casing surface of the first waveguide (1), which array is designed to receive optical signals from the second cores (21a, 21b, 21c, 21d).

## Revendications

1. Spectromètre ou démultiplexeur (5) comprenant au moins un premier guide d'ondes (1) qui est une fibre optique pourvue d'un premier cœur (11) et d'une gaine (12) entourant le premier cœur, des deuxième cœurs (21a, 21b, 21c, 21d) étant intégrés dans la gaine (12) pour former des deuxièmes guides d'ondes (2), le premier cœur (11) et chaque deuxième cœur (21a, 21b, 21c, 21d) étant guidés côte à côte et à distance les uns des autres dans une section longitudinale (25), et un réseau de Bragg respectif (3a, 3b, 3c, 3d) étant disposé dans ladite section longitudinale.

2. Spectromètre ou démultiplexeur selon la revendication 1,
**caractérisé en ce que** la distance entre le premier cœur (11) et le deuxième cœur (21a, 21b, 21c, 21d) dans la section longitudinale (25a, 25b, 25c, 25d) est comprise entre environ 0,1 et environ 5 fois la longueur d'onde ou entre environ 0,3 et environ 3 fois la longueur d'onde des signaux se propageant dans le premier cœur (11), ou
**caractérisé en ce que** la distance entre le premier cœur (11) et le deuxième cœur (21a, 21b, 21c, 21d) dans la section longitudinale (25a, 25b, 25c, 25d) est comprise
entre environ 100 nm et environ 5 µm, ou
entre environ 200 nm et environ 4 µm, ou
entre environ 300 nm et environ 4 µm, ou
entre environ 400 nm et environ 3 µm, ou
entre environ 500 nm et environ 3 µm.

3. Spectromètre ou démultiplexeur selon l'une des revendications 1 à 2,
**caractérisé en ce qu'**un réseau de photodiodes est disposé sur une surface de la gaine du premier guide d'ondes (1), lequel réseau est conçu pour recevoir des signaux optiques provenant des deuxièmes cœurs (21a, 21b, 21c, 21d).

4. Spectromètre ou démultiplexeur selon l'une des revendications 1 à 3,
**caractérisé en ce qu'**au moins un guide d'ondes (1, 2) est un guide d'ondes monomode et au moins un guide d'ondes (2, 1) est un guide d'ondes multimode.

5. Spectromètre ou démultiplexeur selon l'une des revendications 1 à 4,
**caractérisé en ce que** le réseau de Bragg (3a, 3b, 3c, 3d) est disposé dans le premier cœur (11), et/ou
**en ce que** le réseau de Bragg (3a, 3b, 3c, 3d) est disposé dans le deuxième cœur (21a, 21b, 21c, 21d), et/ou
**en ce que** le réseau de Bragg (3a, 3b, 3c, 3d) est disposé dans la gaine (12) entre le premier cœur (11) et le deuxième cœur (21a, 21b, 21c, 21d).

6. Spectromètre ou démultiplexeur selon la revendication 5,
**caractérisé en ce que** les réseaux de Bragg (3a, 3b, 3c, 3d) présentent chacun une constante de réseau différente.

7. Spectromètre ou démultiplexeur selon l'une des revendications 1 à 6,
**caractérisé en ce qu'**il existe une désadaptation entre le premier cœur (11) et le deuxième cœur (21a, 21b, 21c, 21d), qui empêche ou réduit le couplage de signaux optiques entre les cœurs (11, 21a, 21b, 21c, 21d).

8. Spectromètre ou démultiplexeur selon la revendication 7,
**caractérisé en ce que** la désadaptation est générée par des contrastes d'indice de réfraction différents entre le cœur (11, 21a, 21b, 21c, 21d) et la gaine (12) et/ou par des diamètres différents et/ou par des sections transversales différentes des cœurs (11, 21a, 21b, 21c, 21d).

9. Spectromètre ou démultiplexeur selon l'une des revendications 1 à 8,
**caractérisé en ce qu'**au moins un réseau de Bragg (3a, 3b, 3c, 3d) est réalisé sous la forme d'un réseau de Bragg chirpé, et/ou
**en ce qu'**au moins un réseau de Bragg (3a, 3b, 3c, 3d) est réalisé sous la forme d'un réseau de Bragg apodisé, et/ou
**en ce qu'**au moins un réseau de Bragg (3a, 3b, 3c, 3d) est réalisé sous la forme d'un réseau de Bragg en forme de pi.

10. Procédé de fabrication d'un démultiplexeur ou d'un spectromètre, comprenant les étapes suivantes consistant à :
fournir une fibre optique pourvue d'un premier cœur (11) et d'une gaine (12) entourant le premier cœur, en tant que premier guide d'ondes (1), et
exposer point par point la gaine (12) à l'aide d'un laser à impulsions courtes, de sorte que l'indice de réfraction varie dans les zones exposées, au moins un deuxième cœur (21a, 21b, 21c, 21d) étant inscrit dans la gaine (12) de manière à former un deuxième guide d'ondes (2), et le premier cœur (11) et le deuxième cœur (21a, 21b, 21c, 21d) s'étendant côte à côte et au voisinage l'un de l'autre dans une section longitudinale (25a, 25b, 25c, 25d), et
exposer point par point la gaine (12) à l'aide d'un laser à impulsions courtes, de sorte qu'au moins un réseau de Bragg (3a, 3b, 3c, 3d) soit inscrit dans la gaine (12) entre le premier cœur (11) et le deuxième cœur (21a, 21b, 21c, 21d), et/ou
exposer point par point le premier cœur (11), de sorte qu'au moins un réseau de Bragg (3a, 3b, 3c, 3d) soit inscrit dans le premier cœur (11), et/ou
exposer point par point le deuxième cœur, de sorte qu'au moins un réseau de Bragg (3a, 3b, 3c, 3d) soit inscrit dans le deuxième cœur (21a, 21b, 21c, 21d), de sorte qu'au moins un réseau de Bragg (3a, 3b, 3c, 3d) se trouve dans la section longitudinale (25a, 25b, 25c, 25d).

11. Procédé selon la revendication 10,
**caractérisé en ce que** la distance entre le premier cœur (11) et le deuxième cœur (21a, 21b, 21c, 21d) dans la section longitudinale (25a, 25b, 25c, 25d) est comprise
entre environ 100 nm et environ 5 µm, ou
entre environ 200 nm et environ 4 µm, ou
entre environ 300 nm et environ 4 µm, ou
entre environ 400 nm et environ 3 µm, ou
entre environ 500 nm et environ 3 µm.

12. Procédé selon l'une des revendications 10 ou 11,
**caractérisé en ce que** l'on fait varier le nombre d'impulsions individuelles agissant sur un point, la forme d'impulsion, l'énergie d'impulsion, la vitesse d'avance et/ou le nombre d'opérations de réécriture.

13. Procédé selon l'une des revendications 10 à 12,
**caractérisé en ce qu'**une désadaptation est générée entre le premier cœur (11) et le deuxième cœur (21a, 21b, 21c, 21d), qui empêche ou réduit le couplage de signaux optiques entre les cœurs (11, 21a, 21b, 21c, 21d).

14. Procédé selon l'une des revendications 10 à 13,
**caractérisé en ce que** les réseaux de Bragg (3a, 3b, 3c, 3d) présentent chacun une constante de réseau différente.

15. Procédé selon l'une des revendications 10 à 14,
**caractérisé en ce qu'**un réseau de photodiodes est disposé sur une surface de la gaine du premier guide d'ondes (1), lequel réseau est conçu pour recevoir des signaux optiques provenant des deuxièmes cœurs (21a, 21b, 21c, 21d).
